# EUROPEAN PATENT APPLICATION

(11) **EP 3 832 949 A1**
(43) Date of publication of application: **09.06.2021**
(21) Application number: 18928574.5
(22) Date of filing: 29.07.2018
(51) Int. Cl.: H04L 9/14

(54) **METHOD FOR SECURING A DATA COMMUNICATION NETWORK**

(71) Applicant: Nouvenn Corporation, Wilmington, New Castle County, DE 19801 (US); Francisco, Mathieu, 81210-090 Curitiba (BR)
(72) Inventor: MATHIEU, Francisco, 81210-090 Curitiba (BR)
(74) Representative: Díaz de Bustamante y Terminel, Isidro
(86) International application number: PCT/BR2018/050263
(87) International publication number: WO 2020/024021

(57) **Abstract**

The present patent application pertains to the field of computers and more specifically relates to the protection of digital data communication, representing an architecture that can be implemented in the lowest layers of the operating system or even in the hardware or firmware, which provides transparent services with confidentiality and secure mutual authentication between two hosts.

## Description

### Field of the invention

The object of the present invention patent is a practical and innovative "METHOD FOR SECURING A DATA COMMUNICATION NETWORK", belonging to the field of IT articles, used more precisely in data communication protection.

More specifically, the invention refers to a new architecture that will allow the secure implementation of connected solutions. This architecture provides mutual authentication services between connected devices, in addition to secrecy in network communications in a transparent and automatic way, using key exchanges through distributed means, without depending on a public key infrastructure (PKI) that is usually managed by humans.

Therefore, in the patent application in question, we have a communication architecture specially designed and developed to obtain enormous practicality and providing great advantages in its use.

It is, therefore, a product developed with perfection and efficiency, in order to offer a method of security in data communication, providing great reliability to what it lends itself to, both for its functional characteristics and for the reliability of the product.

### State of the art

Patent document US20020042875A1, entitled "Method and apparatus for end-to-end secure data communication", discloses a method that can provide security for all network applications without any change to the applications. The method is compatible with other network protocols, such as network address translation (NAT), Internet control message protocol (ICMP) and all quality of service (QoS) protocols that operate up to the secure transport layer. Communication systems based on other protocols, such as IPSec, cannot achieve end-to-end security, remaining compatible with network protocols, such as NAT and ICMP.

Patent document US6751729B1, entitled "Automated operation and security system for virtual private networks", discloses a node device for providing secure communication services over a data network, such as the Internet or another public or private, packet-switched network, for multiple computers that are coupled through the node device and several other node devices. The node device includes a network communication interface to couple the node device to the data network. The node device includes a data storage medium containing encryption in formation that is unique to the node device. The node device also includes a tunnel communication service coupled to the network interface configured to maintain an encrypted communication tunnel with each of several other node devices using encryption. For instance, encrypted communication tunnels are implemented using the "IPsec" or "PPTP" protocols. The node device includes a routing database for storing routing data and a router coupled to the tunnel communication service and the routing database. The router can pass communication from one communication tunnel to another. A centralized server can be used to centrally control node devices, reducing or eliminating on-site administration of node devices.

Patent document US6839759B2, entitled "Method for establishing secure communication link between computers of virtual private network without user entering any cryptographic information", discloses a technique for establishing a secure communication link between a first computer and a second computer in a computer network. Initially, a secure communication mode is enabled on a first computer without the user entering any encryption. This is to establish the secure communication mode of communication. Then, a secure communication link is established between the first computer and a second computer over a computer network, based on the enabled secure communication mode. The secure communication link is a virtual private link for network communication through the computer network in which one or more data values that vary according to a pseudo-random sequence are inserted into each data packet.

Patent document US20130298182A1, entitled "Internet Protocol security policy-based configuration for a virtual private network", discloses a method for performing Internet Security Protocol (IPSec) policy-based configuration for a Virtual Private Network (VPN)). According to one embodiment, a browser-based interface of a network device displays a policy page through which various settings can be configured for a VPN connection. The settings include an "IPSec" tunnel to be established between the network device and a "peer". One or more parameter values corresponding to one or more of the configurations are received and respond to a policy file that is created or modified, corresponding to the "VPN" connection. The policy file contains several parameter values that correspond to the settings. Establishing the "VPN" connection between the network device and the "peer" is requested based on the parameter values contained in the policy file, by sending a notification request, including the policy file, from the network device to the "peer".

Patent document US8705513B2, entitled "Methods and apparatus to communicatively couple virtual private networks to virtual machines within distributive computing networks", discloses methods and devices for communicatively connecting virtual private networks to virtual machines within the computing of distributive networks. An example of the disclosed method includes receiving a request to provision a virtual machine from a virtual private network, determining a host for the virtual machine within a distributive computing network, creating the virtual machine within the host, coupling the virtual machine in a communicative way to a virtual switch of a local area network within the distributive computing network, configuring a part of a router to be communicatively coupled to the virtual machine through the local virtual network, specifying an address space within the router associated with at least one of the virtual machines or the virtual private network communicatively coupled to the router, and communicationally coupling the part of the router to the virtual private network.

Patent document US6185681B1, entitled "Method of transparent encryption and decryption for an electronic document management system", reveals cryptographic systems and methods. Cryptographic methods provide transparent encryption and decryption of documents in an electronic document management system. The cryptographic system adds a software module to an electronic document management system that captures file I/O events and performs cryptographic functions on the relevant documents before passing control back to the electronic document management system.

Patent document US7188180B2, entitled "Method for establishing secure communication link between computers of a private virtual network", discloses a technique for establishing a secure communication link between a first computer and a second computer in a computer network. Initially, a secure communication mode is enabled on a first computer without the user entering any encryption. Then, a secure communication link is established between the first computer and a second computer over a computer network, based on the enabled secure communication mode. The secure communication link is a virtual private link for network communication through the computer network in which one or more data values that vary according to a pseudo-random sequence are inserted into each data packet.

Patent document US20050033988A1, entitled "Method and system for transparent encryption and authentication of file data protocols by the Internet protocol", discloses a method that processes one or more files using a security application. The method includes connecting the client to a "proxy" server, which is coupled to one or more "NAS" servers. The method includes requesting a file from a client to the "proxy" server and authenticating a requesting user from the client. The method also includes the authorization of the requesting user for the requested file; requesting the file from one or more "NAS" servers after authenticating and authorizing; and requesting the file of one or more storage elements. The file is transferred from one or more storage elements via the "NAS" server to the "proxy" server.

The method determines the header information in the file on the "proxy" server and identifies a policy based on the header information on the "proxy" server. The method also includes processing (for example, unzipping the file, decrypting the file and verifying the file) according to the policy. The method includes transferring the processed file to the client's user.

US20020112167A1, entitled "Method and device for transparent encryption", discloses a method and device for protecting confidential information on the server or other computing environments. Several electronic requests addressed to a server system are received through network couplings and evaluated. The assessment looks for sensitive information, including credit card information and private user information. Upon detecting sensitive data, cryptographic operations are applied to sensitive data. When sensitive data is being transferred to the server system, cryptographic operations encrypt the sensitive data prior to the transfer between components of the server system. When sensitive data is being transferred from the server system, cryptographic operations decrypt sensitive data before transferring between network couplings. Cryptographic operations also include hash and key hash operations.

Patent document US20060064750A1, entitled "System and methods for transparent encryption", comprises a system and method where conventional "SSL" termination devices support secure connections only to a predetermined destination address. An "SSL" termination device accepts a plain text connection and associates it with a secure connection to an arbitrary endpoint, intercepting a connection request from the local subnet, identifying the intended destination of the connection and establishing a secure connection with the destination connection and the secure connection to provide a connection through the "gateway" device. The "SSL" termination device identifies an outbound secure connection request from a client and intercepts the connection request to identify the recipient's destination. The "SSL" termination device establishes a secure connection using the identified destination, and associates the connections by mapping the intercepted connection to the recipient. The identified recipient allows the secure connection to the destination and the mapping allows the traffic of messages received from the client over the local connection to be mapped to the destination.

Patent document CN101710380A, "Electronic document security protection method", discloses an electronic document security protection method, belonging to the technical field of information security and computer software. The method comprises the steps of: a- encrypting a plain text by a requesting a secret to obtain an encrypted document, wherein the encrypted document comprises an encrypted text obtained by symmetrically encrypted the plain text using a secret key and an encryption obtained by asymmetrically encrypting secret key I using secret key II; b- transmitting the encrypted document to a classified management part using the secret requesting part, decrypting it by the classified management part using a secret key corresponding to the secret to get the original text; c- encrypting plain text using the classified management part to obtain a classified document, in which the classified document comprises a cipher text obtained by symmetrically encrypted the plain text using a secret key III and a cipher text obtained by asymmetric encryption of the secret key III using a secret key IV; and d- transmitting the classified document to an audience of classified documents using the secret part of the administration. The invention can be used for the secure protection of the electronic document.

Patent document CN101819618A, entitled "File encryption method", discloses a file encryption and method related to the technical field of computer software and information security. Based on a file system catalog system, the invention positions the catalog (folder), defines a protection area, links an encryption device and divides a work area and a secret area; corresponding to the access of the encryption device; the protection area is conducted to be converted into the open state from the closed state, the catalog and the file name are decrypted and displayed, the contents of the file's ciphertext in a working chamber are decrypted in plain text and the content of the cipher text in a "secret camera" file still maintains the normal encrypted state; corresponding to the removal of the encryption device, the protection area is led to be converted into the closed state from the open state, the catalog and the file name are encrypted and hidden, and the plain text of the file is encrypted in the cipher text; the catalog is monitored in real time under the open state, the cipher text of the file stored in the working chamber is automatically decrypted and the plain text file stored in the "secret chamber" is automatically encrypted; a plurality of protection areas can be adjusted in order to link a relative plurality of encryption devices, the effect of shared protection or interlocking protection being obtained by adopting different control strategies to build the visual transparent protection of a secret environment with multiple users.

Patent document CN104200176A, entitled "System and method to perform transparent encryption and decryption on file in a smart mobile terminal", relates to the archiving of the security of mobile internet applications in information security and discloses a system and method to execute transparent encryption and decryption of a file on a smart mobile terminal. This solves the issue of traditional encryption and decryption schemes of not being high on security and heing complex to operate. According to the method, when a user requests access to the mobile terminal's privacy file, mutual identity authentication is performed between the mobile terminal and a smart bracelet first, then a secret conversation key is generated through a consultation, a secret protection key sent by the smart bracelet is obtained after successful authentication, the secret protection key is defined as a read-write filtering drive for a virtual protection magnetic disk after the virtual protection magnetic disk is mounted, corresponding operations are performed on the virtual magnetic disk according to the specific order type of the user and therefore the transparent scheme in which encryption and decryption are carried out on the file on the smart mobile terminal based on smart bracelet authentication is achieved. The system and method for carrying out transparent encryption and decryption in the file on the smart mobile terminal are applicable to access control over the file on the mobile terminal.

Patent document US20040025018A1, entitled "Secure end-to-end communication in mobile ad hoc networks", reveals a system where a secure routing protocol for an ad hoc network requires only that the final communication nodes have a security association. The protocol combines a secure route discovery protocol and a secure message transmission protocol (SMT) to provide comprehensive security. The routing protocol provides connectivity information by discovering one or more routes in the presence of adversaries that actively interrupt the routing operation. A route discovery request is sent from a source node to a destination node, which responds by sending a response via the same route obtained by the request. The source and destination nodes use a shared secret key to verify the authenticity of the request, response and determined route. Using a discovered plurality of routes, the "SMT" protocol separates messages to be transmitted in multiple segments and routes the segments through the set of routes simultaneously. The destination node sends feedback to the source, identifying which segments were received. The source uses this information to resend segments that have not been received and to identify failed routes.

In addition to the documents mentioned above, a list of patent documents follows, as ference, but of less relevance to the patent in question.

Patent Document US20050033988A1, entitled "Method and system for transparent encryption and authentication of file data protocols by the Internet protocol".

Patent Document US20020112167A1, entitled "Method and apparatus for transparent encryption".

Patent Document US20060064750A1, entitled "System and methods for transparent encryption".

Patent Document CN101710380A, entitled "Electronic document safety protection method".

Patent Document CN101819618A, entitled "File encryption method".

Patent Document CN104200176A, entitled "System and method for performing transparent encryption and decryption on file in a smart mobile terminal".

Patent document US7266842B2, entitled "Control function that implements selective authentication of transparent data in an integrated system".

Patent document US6885660B2, entitled "End-to-end network communication".

Patent document US7152160B2, entitled "Method and arrangement for ensuring access to a communications network".

Patent document US8239531B1, entitled "Method and apparatus to connect to virtual private networks for secure transactions".

Patent document US7360083B1, entitled "Method and system to provide end-to-end security solutions to assist in accelerating the protocol on networks using selective layer encryption".

Patent document US7506368B1, entitled "Methods and apparatus for network communications via a transparent security proxy".

Patent document US7478427B2, entitled "Method and apparatus for providing adaptive VPN to enable different levels of security in virtual private networks (VPNs)".

### Disadvantages of the state of the art

As one may notice, none of these patent documents known to the state of the art have the characteristics of the object of the present patent application.

As is known, notably by experts on the subject, nowadays, in an application, security is implemented end-to-end, that is, the security implementation that allows mutual authentication and confidentiality is implemented in the layers close to the application, assuming that the user normally has control over the communication parameters. An example of such an approach is the "TLS" (Transport Layer Security) protocol, which adds security to the transport layer of applications, requiring applications to be updated to support new security mechanisms and depending on "PKI" network infrastructure.

On the other hand, there are "VPN" (Virtual Private Networks) applications that normally use the "IPSec" protocol, providing a secure end-to-end channel between two nodes. However, the "IPSec" implementation is not enabled by all ISP routers. For this reason, "VPN" networks are usually implemented as virtual networks (overlay), which allow encrypted traffic to pass through routers as if they were a common application. Whether with "IPSec" or "overlay", configuring "VPN" requires complicated and manual settings. Thus, its use is not widespread on the Internet, especially in the context of "peer to peer" communication (P2P).

In addition, these implementations usually depend on a trust network, called "PKI" (Public Key Infrastructure), which provides a way to create a chain of trust, which sometimes it is still done through the use of certificates issued manually by third parties.

In general, legacy traffic on the Internet (IP/TCP/UDP) is still very widespread. Many devices are still running "telnet," ftp "," http ", etc., where "man-in-the-middle" (MITM) attacks are regular.

### Proposed solution

It was with these inconveniences in mind that, after numerous researches and studies, the inventor, a person related to the area, created and developed the object of this patent, devising a "SECURITY METHOD FOR A DATA COMMUNICATION NETWORK", with the main solution being an architecture and a mechanism that allows secure end-to-end transparent communication between two devices.

This patent application presents a practical and innovative "SECURITY METHOD FOR A DATA COMMUNICATION NETWORK", designed and developed according to the most modern techniques, and with possible applications in any digital data exchange. Whether on the Internet, on the "GSM" network (4G, 5G) or any other type of packet-switched computer network.

The architecture optionally provides these mechanisms and can be implemented in any network layer, being supported by any communication mechanism: "IP", "Ethernet", "Wifi", "UDP", "TCP", among others.

The mechanism that provides this architecture can be implemented in "hardware", as programmable logic in "FPGA" or even in "ASIC". It can also be implemented by software, as an operating system module , as a "driver" or "firmware" of the network interface and even directly in the application.

Some commercial applications of this architecture are:
- Secure "M2M", "loT" and "P2P" networks;
- Additional security in "Sim Card" / "Smart Card" applications;
- Additional security on "GSM", "LTE", "4G" and "5G" cellular calls;
- Additional "TCP" and "UDP" connection security on the Internet;
- Mutual authentication mechanism between devices;
- Fast connection restoration mechanism;
- Security module mechanism for "Home Banking" applications, among others.

One must understand that the security method in data communication network in question is extremely simple in concept, being, therefore, easily feasible, however, excellent practical and functional results are obtained, offering an innovative solution on the known security protocols.

### Brief description of the drawings of the invention

To complement the present description and obtain a better understanding of the characteristics of the present invention and in accordance with its preferred embodiment, the follow description refers to a set of diagrams, where, in an exemplified way, although not limiting, the following are represented:

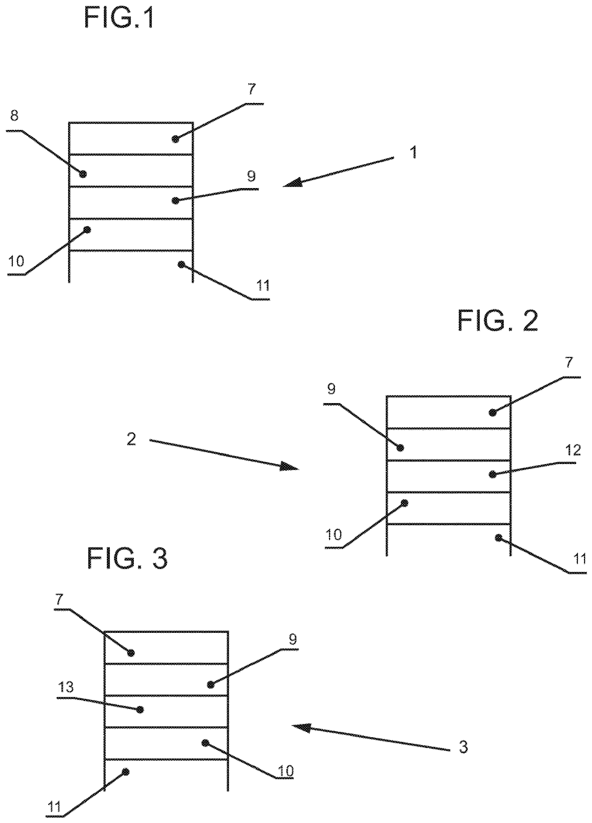

FIG.1 - Shows a diagram of the "TLS" security mechanism - (Transport Layer Security) (1). Wherein one may see: Application (7); TLS (8); TCP (9); IP (10) and Ethernet (11).
FIG. 2 - Shows a diagram of the "IPSec" security mechanism (2). Wherein one may see: Application (7); TCP (9); TCP (12); IP (10) and Ethernet (11).
FIG.3 - Shows a diagram of the transparent security mechanism in "IP" networks (3), with the implementation of the data communication network security method (13), in presentation. Wherein one may see: Application (7); TCP (9); security method in data communication network (13); IP (10) and Ethernet (11).

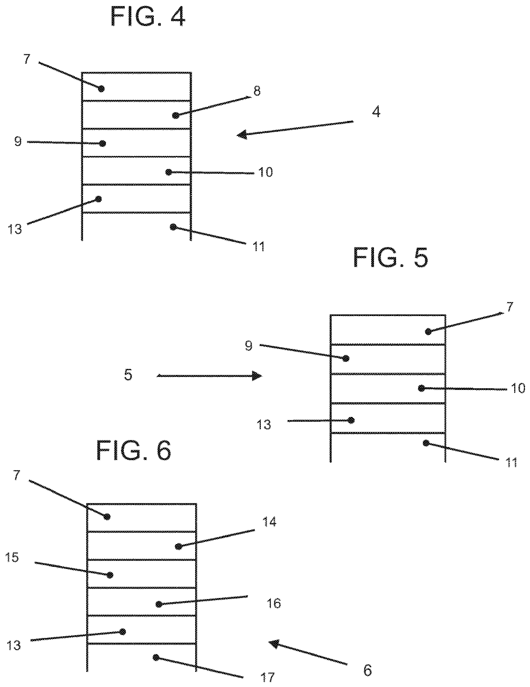

FIG. 4 - Shows a diagram of the transparent security mechanism in "IP" networks with an application that already uses "TLS" (4) and with the implementation of the data communication network security method (13). Wherein one may see: Application (7); TLS (8); (TCP (9); IP (10); security method in data communication network (13) at hand and Ethernet (11).
FIG. 5 - Shows a diagram of the transparent security mechanism in Ethernet networks (5), with the implementation of the data communication network security method (13), in presentation. Wherein we represented: Application (7); (TCP (9); IP (10); security method in data communication network (13) at hand and Ethernet (11).
FIG. 6- Shows a diagram of the transparent security mechanism in Ethernet networks (6), with the implementation of the data communication network security method (13), in presentation. Wherein we represented: Application (7); UDP (14); 6L0WPAN (15); IPv6 (16); network data communication security method (13) and IEEE802.15.4 (17).

### Detailed description of the invention

In accordance with 0 as illustrated in the figures above, 0 " METHOD FOR SECURING A DATA COMMUNICATION NETWORK ", object of the present patent, refers to a mechanism or architecture that can be implemented in the lower layers of the operating system or even in "hardware" or "firmware". It provides transparent services for secrecy and secure mutual authentication between two "hosts".

The services are offered in a transparent manner, and the application does not need any modifications for its correct and safe operation.

The method for securing a data communication network (13) uses explicit key exchanged when establishing the connection, as well as using a distributed database with an information protocol that allows "hosts" to exchange information about other "hosts".

The implementation can also optionally use non-volatile memory, in order to remember the "hosts" with which it communicated, and to reestablish the secure communication channel.

Each "host" has a key pair (public and private) that can be generated when the "host" is powered up or loaded from non-volatile memory. When the "host" tries to communicate with another "host" on the network, first the exchange of keys is made, so that the "hosts" have knowledge of their partner's public key. As soon as both hosts are aware of their partner's public key, a process called "Diffie Hellman" is performed to establish a temporary session key that uses "AES" or similar encryption. Any subsequent connection between these two "hosts" uses the symmetric cryptographic key established by this process. A "host" may request that this procedure be reinstated at any time in order to change the session key. When the session ends, the "hosts" discard the symmetric key, but can keep their key pair (public and private) for authentication and future reestablishment of sessions.

The great advantage of this architecture is the fact that it can be implemented in lower layers of the system, for example, as a module of the operating system's network stack, as part of the network interface driver, or even in "hardware" as programmable logic, "FPGA" or "ASIC". In some of these implementations, even the system reboot (formatting, updating) can preserve the component.

In addition, the use of non-volatile memory is optional, that is, it is not necessary, since the "host" can renegotiate public keys whenever it encounters another unknown "host", however, it can use non-volatile memory to quickly re-establish and "reauthenticate" previous sessions.

Surely, when the present invention is put into practice, modifications can be made with regard to certain details of construction and shape, without this implying a departure from the fundamental principles that are clearly substantiated in the claims framework, with it thus being understood that the terminology used was for the purpose of description and not limitation.

## Claims

1. "METHOD FOR SECURING A DATA COMMUNICATION NETWORK ", the object of this patent revealing a mechanism or architecture that can be implemented in the lower layers of the operating system or even in "hardware" or "firmware", which provides services as confidentiality and secure mutual authentication between two "hosts" and the services are offered in a transparent manner, and the application does not need any modifications for its correct and secure operation, **characterized by** the fact that the method uses explicit key exchanges when establishing the connection, as well as being able to use a distributed database with an information protocol that allows "hosts" to exchange information about other "hosts"; the implementation can also optionally use non-volatile memory, in order to remember the "hosts" with which it has communicated, and to reestablish the secure communication channel; each "host" has a key pair (public and private) that can be generated when the host is powered up or loaded from non-volatile memory; when the "host" tries to communicate with another "host" on the network, first the key exchange is carried out, so that the "hosts" have knowledge of their partner's public key; as soon as both hosts are aware of their partner's public key, a process called "Diffie Hellman" is performed to establish a temporary session key that uses "AES" or similar encryption; any subsequent connection between these two hosts uses the symmetric cryptographic key established by this process; a "host" may request that this procedure be reinstated at any time in order to change the session key; when the session ends, the "hosts" discard the symmetric key, but can keep their key pair (public and private) for authentication and future session reestablishment.

2. "METHOD FOR SECURING A DATA COMMUNICATION NETWORK ", according to claim 1, **characterized by** the fact that the architecture can be implemented in lower layers of the system, for example, as a module of the operating system's network stack, as part of the network interface driver, or even in hardware such as programmable logic, "FPGA" or "ASIC", and in some of these implementations, even restarting the system (formatting, updating) can preserve the component; in addition, the use of non-volatile memory is optional; it is not necessary, since the "host" can renegotiate public keys whenever it encounters another unknown host, but, however, it can use non-volatile memory to quickly re-establish and reauthenticate previous sessions.

## Amended claims

### Amended claims under Art. 19.1 PCT

1. "METHOD FOR SECURING A DATA COMMUNICATION NETWORK", the object of the present patent, revealing a mechanism/architecture that allows secure and transparent end-to-end communication between two devices and to use explicit key exchange when establishing the connection, without the application requiring any modification for its correct and safe functioning **characterized by** the fact that it is implemented in the lower layers of the operating system, as part of the network stack, network interface driver, in "hardware" or "firmware", in logic, whether it is programmable or not, which provides services such as confidentiality and secure mutual authentication between two "hosts", supported by any application or protocol and deployed as a system component.

2. "METHOD FOR SECURING A DATA COMMUNICATION NETWORK", the object of the present patent, revealing a mechanism/architecture that allows secure and transparent end-to-end communication between two devices and to use explicit key exchange when establishing the connection, without the application requiring any modification for its correct and safe functioning **characterized by** the fact that it uses a distributed database with a information protocol that allows "hosts" to exchange information about other "hosts" and not depend on centralized certifying entities.

3. "METHOD FOR SECURING A DATA COMMUNICATION NETWORK", object of this patent, reveals a mechanism/architecture that allows secure and transparent end-to-end communication between two devices and uses explicit key exchange when establishing the connection, and the application does not need any modifications for its correct and safe functioning **characterized by** the fact that it is transparent to applications and uses non-volatile memory in order to inform the "hosts" with whom it has communicated, and reestablish the secure communication channel.

4. "METHOD FOR SECURING A DATA COMMUNICATION NETWORK", the object of this patent revealing a mechanism/architecture that allows secure and transparent end-to-end communication between two devices and to use explicit key exchange when establishing the connection, without the application requiring any modifications for its correct and safe functioning, **characterized by** the differentiated construction of the system with exchange of public keys for the knowledge of the two "hosts", the DH process being executed and establishing the temporary session key and the communication through the symmetric cryptographic key established in the process, any of the "hosts" at any time that this procedure is reestablished in order to change its key, when the session ends, the "hosts" discard the symmetric key and keep the key pair (public and private) for authentication and future reestablishment of sessions does not depend on certification authorities to function.

5. "METHOD FOR SECURING A DATA COMMUNICATION NETWORK", object of this patent reveals a mechanism/architecture that allows secure and transparent end-to-end communication between two devices and the use of an explicit exchange of keys when establishing the connection, and the application does not need any modifications for its correct and safe operation, **characterized by** an architecture that can be implemented in lower layers of the system as a module of the operating system's network stack, as part of the network interface driver, or in programmable logic hardware, the component being preserved in formatting or updates and supported by any communication mechanism.

6. "METHOD FOR SECURING A DATA COMMUNICATION NETWORK", the object of this patent revealing a mechanism/architecture that allows for secure and transparent end-to-end communication between two devices, using explicit key exchange when establishing the connection , and without the application requiring any modifications for its correct and safe functioning, **characterized by** the fact that it uses non-volatile memory, since the "host" can renegotiate public keys whenever it encounters another unknown host, and use this memory to quickly re-establish and reauthenticate previous sessions.
